# EUROPEAN PATENT SPECIFICATION

(11) **EP 2 489 582 B1**
(45) Date of publication and mention of the grant of the patent: **21.05.2014**
(21) Application number: 12155133.7
(22) Date of filing: 13.02.2012
(51) Int. Cl.: B62J 99/00, B60K 37/02, B60K 37/06, B62K 11/14

(54) **Motorcycle**
Motorrad
Motocyclette

(30) Priority: 17.02.2011 JP 2011032092
(43) Date of publication of application: 22.08.2012
(73) Proprietor: Yamaha Hatsudoki Kabushiki Kaisha, Shizuoka-ken 438-8501 (JP)
(72) Inventor: Surawichai, Pisithsak, 10540 Samutprakarn (TH); Hongpong, Nantakorn, 10540 Samutprakarn (TH)
(74) Representative: Zimmermann, Tankred Klaus

(56) References cited:
- EP-A1- 1 842 766
- FR-A- 1 164 662
- FR-A1- 2 833 541
- GB-A- 301 636

## Description

### BACKGROUND OF THE INVENTION

### Technical Field

The present invention relates to a motorcycle.

### Background Art

The motorcycles are generally provided with meters for showing a rider a variety of information including the vehicle speed, the engine speed and the remaining amount of fuel. For example, a motorcycle provided with a meter unit is described in Japan Laid-open Patent Application Publication No. JP-A-2006-281917. The meter unit includes a variety of meters regarding the vehicle speed, the engine speed, the remaining mount of fuel and the coolant temperature.

EP 1 842 766 A1 discloses a meter device for a straddle-type vehicle having at least two independent indicators being aligned in a vehicle width direction and being accommodated in a housing, said housing comprising a front wall, said front wall being provided with a rearwardly and upwardly inclined first portion positioned forward and inbetween the indicators, and with a rearwardly and upwardly inclined second portion positioned respectively in front of the indicators, wherein, when viewed from laterally of the vehicle, the first and second portions are positioned in the same position or the first portion projects more forward than the second portion.

### SUMMARY OF THE INVENTION

It is an object of the present invention to provide a motorcycle including a plurality of meters with enhanced visibility

This object is achieved by a motorcycle of claim 1.

In the aforementioned conventional meter unit, various meters are concentrated in a single place. The structure is produced for meeting demands of minimizing a rider's action of visually confirming the meters. Such demands are greater on the motorcycles than on the automobiles. However, it may be difficult for a rider to instantly read necessary information when the meters are disposed extremely closer to each other. For example, the meters mounted on a motorcycle are directly exposed to rain drops in a rainy day. Iri this case, it can be difficult for a rider to distinctly recognize the respective meters in a moment. Such drawbacks are avoided by the inventive approach.

A motorcycle according to a first aspect of the present invention includes a vehicle body frame, a handle member, a main switch, a first meter and a second meter. The vehicle body frame includes a head pipe. The handle member includes a handle bar. The handle member is configured to be rotatable with respect to the head pipe. The main switch is configured to start a vehicle. The first meter is configured to display information of the vehicle. The second meter is configured to display information of the vehicle. The second meter is disposed separately from the first meter. The first meter is disposed forwards of the handle bar seen in a direction of an axis of the head pipe. The second meter is disposed rearwards of the handle bar seen in the direction of the axis of the head pipe. The second meter is fixed to the handle member. The second meter is disposed leftwards of the axis of the head pipe. The main switch is disposed rearwards of the handle bar seen in the direction of the axis of the head pipe. The main switch is disposed rightwards of the axis of the head pipe.

A motorcycle according to a second aspect of the present invention relates to the motorcycle according to the first aspect of the present invention. In the motorcycle, the handle bar is bent in a first bent portion and a second bent portion. The first bent portion is positioned leftwards of a center portion of the handle bar in a transverse direction of the vehicle. The second bent portion is positioned leftwards and forwards of the first bent portion. The second meter is disposed rearwards of a portion of the handle bar positioned between the first bent portion and the second bent portion.

A motorcycle according to a third aspect of the present invention relates to the motorcycle according to the first aspect of the present invention. In the motorcycle, the handle member further includes a handle fixation portion for fixing the handle bar. The second meter is at least partially positioned forwards of a rear end of the handle fixation portion seen in the direction of the axis of the head pipe.

A motorcycle according to a fourth aspect of the present invention relates to the motorcycle according to the first aspect of the present invention. In the motorcycle, the second meter is not overlapped with the main switch at a maximum steering angle of the handle member seen in the direction of the axis of the head pipe.

A motorcycle according to a fifth aspect of the present invention relates to the motorcycle according to the first aspect of the present invention. In the motorcycle, a peak portion of the second meter is positioned higher than a center portion of the handle bar in a transverse direction of the vehicle. A bottom portion of the second meter is positioned lower than the center portion of the handle bar in the transverse direction of the vehicle.

A motorcycle according to a sixth aspect of the present invention relates to the motorcycle according to the first aspect of the present invention. In the motorcycle, the handle member further includes a handle fixation portion for fixing the handle bar and a handle support portion for supporting the handle fixation portion. The handle support portion is disposed under the handle bar. The second meter is fixed to the handle support portion.

A motorcycle according to a seventh aspect of the present invention relates to the motorcycle according to the first aspect of the present invention. The motorcycle further includes a seat and a vehicle body cover. The seat is disposed rearwards of the handle member. The vehicle body cover covers the vehicle body frame. Further, the vehicle body cover has a contour recessed downwards between the handle member and the seat.

A motorcycle according to an eighth aspect of the present invention relates to the motorcycle according to the first aspect of the present invention. In the motorcycle, the main switch includes a key cylinder allowing a key to be inserted therein. An axis of the key cylinder is obliquely extended rearwards and upwards from a top face of the key cylinder.

A motorcycle according to a ninth aspect of the present invention relates to the motorcycle according to the first aspect of the present invention. The motorcycle further includes a vehicle body cover covering the vehicle body frame. Further, the vehicle body cover includes a rear face cover portion covering a back side of the head pipe. The main switch is disposed in the rear face cover portion.

A motorcycle according to a tenth aspect of the present invention relates to the motorcycle according to the first aspect of the present invention. In the motorcycle, the handle bar is visible between the first meter and the second meter seen in the direction of the axis of the head pipe.

A motorcycle according to an eleventh aspect of the present invention relates to the motorcycle according to the first aspect of the present invention. In the motorcycle, a front end of a top face of the second meter is positioned forwards of a rear end of a center portion of the handle bar in a transverse direction of the vehicle seen in the direction of the axis of the head pipe.

### <Advantageous Effects of the Invention>

According to the motorcycle of the first aspect of the present invention, the first meter and the second meter are separately provided and disposed back and forth through the handle bar. The respective meters can be thereby clearly distinctly recognized. In other words, visibility of each meter is enhanced. Further, the main switch and the second meter separately disposed right and left. The second meter does not tend to be overlapped with the main switch in operating the handle bar. Therefore, the second meter can be inhibited from blocking a rider's operation of the main switch.

According to the motorcycle of the second aspect of the present invention, sufficient distance can be produced between the second meter and the seat. Therefore, it is possible to inhibit a rider from being hit in the knee by the second meter.

According to the motorcycle of the third aspect of the present invention, sufficient distance can be produced between the second meter and the seat. Therefore, it is possible to inhibit a rider from being hit in the knee by the second meter.

According to the motorcycle of the fourth aspect of the present invention, the second meter and the main switch are not overlapped at the maximum steering angle of the handle member. Therefore, the handle member can be further inhibited from blocking a rider's operation of the main switch.

According to the motorcycle of the fifth aspect of the present invention, the second meter can be more compactly disposed compared to the structure that the meter unit is disposed over the handle bar.

According to the motorcycle of the sixth aspect of the present invention, the second meter is fixed to the handle support portion disposed under the handle bar. Therefore, the second meter can be inhibited from blocking attachment or detachment of the handle bar.

According to the motorcycle of the seventh aspect of the present invention, rider's knees are disposed in a space between the handle member and the seat. However, sufficient distance can be produced between the second meter and the seat in the motorcycle of the seventh aspect of the present invention. Therefore, it is possible to inhibit a rider from being hit in the knee by the second meter even when the knees are disposed in the space between the handle member and the seat as described above.

According to the motorcycle of the eighth aspect of the present invention, a rider is supposed to insert a key into the key cylinder from a position obliquely upwards and rearwards of the main switch. In such a motorcycle, a problematic situation tends to be particularly produced that the second meter blocks a rider's operation of the main switch. According to the motorcycle of the eighth aspect of the present invention, however, the main switch and the second meter are separately disposed right and left. Therefore, the second meter can be inhibited from blocking a rider's operation of the main switch.

According to the motorcycle of the ninth aspect of the present invention, the main switch is disposed in the rear face cover portion. In such a motorcycle, interference between the second meter and the main switch especially tends to be problematic. According to the motorcycle of the ninth aspect of the present invention, however, the main switch and the second meter are separately disposed right and left. Therefore, the second meter can be inhibited from blocking a rider's operation of the main switch.

According to the motorcycle of the tenth aspect of the present invention, the handle bar is visible between the first meter and the second meter seen in the axial direction of the head pipe. Therefore, the first meter and the second meter can be easily distinctly recognized. In other words, visibility of each meter is enhanced.

According to the motorcycle of the eleventh aspect of the present invention, sufficient distance can be produced between the second meter and the seat. Therefore, it is possible to inhibit a rider from being hit in the knee by the second meter.

### BRIEF DESCRIPTION OF THE DRAWINGS

Referring now to the attached drawings which form a part of this original disclosure:

FIG 1 is a side view of a motorcycle according to an exemplary embodiment of the present invention;

FIG 2 is a partial front view of the motorcycle;

FIG 3 is a cross-sectional view of FIG 2 sectioned along a line III-III;

FIG 4 is a rear view of a structure including a handle member and its periphery;

FIG 5 is a view of the structure including the handle member and its periphery seen in an axial direction of a head pipe;

FIG 6 is an exploded perspective view of a structure for attaching a second meter to a handle support portion;

FIG 7 is a left side view of a structure including a first meter, the second meter and their periphery;

FIG 8 is a right side view of the structure including the first meter, the second meter and their periphery; and

FIG 9 is a diagram for illustrating a position of the second meter at a maximum steering angle.

### DETAILED DESCRIPTION OF THE EMBODIMENTS

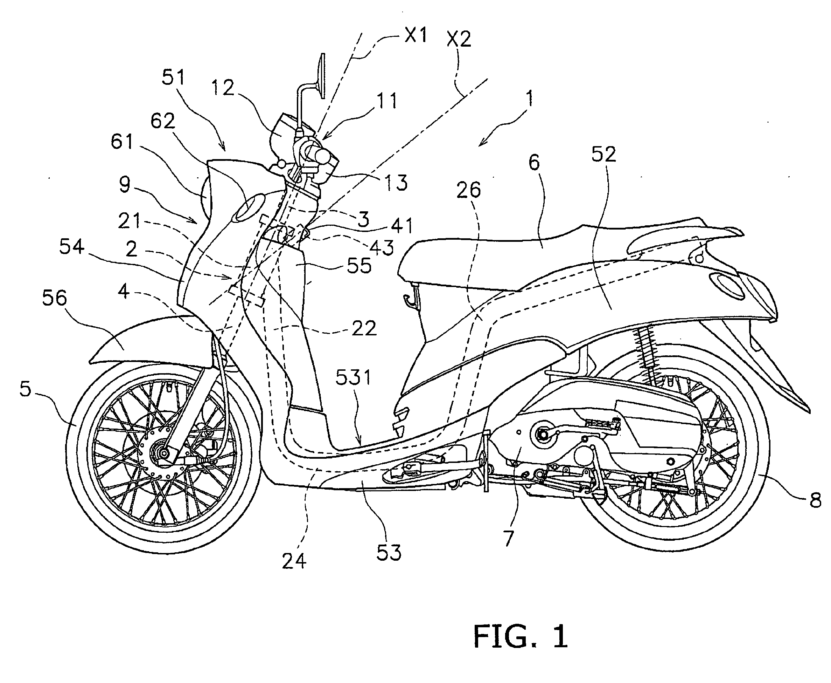

A motorcycle according to an exemplary embodiment of the present invention will be hereinafter explained with reference to the drawings. FIG 1 is a side view of a motorcycle 1 according to the exemplary embodiment. The motorcycle 1 is a scooter-type vehicle. The motorcycle 1 includes a vehicle body frame 2, a steering shaft 3, a front fork 4, a front wheel 5, a seat 6, an engine unit 7, a rear wheel 8 and a vehicle body cover 9. It should be noted in the following explanation that "a longitudinal direction" refers to a back-and-forth direction of a vehicle body seen from a rider seated on the seat 6 unless otherwise particularly explained. Further, rightward, leftward and their related terms refer to corresponding directions seen from a rider seated on the seat 6. Yet further in the present exemplary embodiment, "transversely inwards" and its related terms refer to a direction closer to a longitudinally extended axis passing through the center in a vehicle width direction.

The vehicle body frame 2 is formed by a pipe-like member. The vehicle body frame 2 includes a head pipe 21, a down frame portion 22, an under frame portion 24 and a rear frame portion 26.

The head pipe 21 is positioned in the vehicle body center in the transverse direction. The steering shaft 3 is rotatably inserted into the head pipe 21. A handle member 11 is coupled to the top of the steering shaft 3. In other word, the handle member 11 is disposed to rotate relative to the head pipe 21. A first meter 12 and a second meter 13 are disposed in the surrounding of the handle member 11. The handle member 11, the first meter 12 and the second meter 13 will be explained below in detail. The front fork 4, configured to be extended and contracted, is coupled to the bottom of the steering shaft 3. The front wheel 5 is rotatably supported by the bottom of the front fork 4.

The down frame portion 22 is connected to the head pipe 21. The down frame portion 22 is downwardly extended from the head pipe 21. The under frame portion 24 is connected to the bottom portion of the down frame portion 22. The under frame portion 24 is backwardly extended from the bottom portion of the down frame portion 22. The rear frame portion 26 is connected to the rear portion of the under frame portion 24. The rear frame portion 26 is extended rearwards and upwards from the rear portion of the under frame portion 24.

The seat 6 is disposed over the rear frame portion 26. Further, the seat 6 is disposed over the under frame portion 24. More specifically, the seat 6 is partially disposed over the under frame portion 24. The seat 6 is positioned rearwards of the head pipe 21. Further, the seat 6 is positioned rearwards of the handle member 11.

The engine unit 7 is supported by the vehicle body frame 2. The engine unit 7 is pivotably attached to the vehicle body frame 2 through a pivot shaft (not illustrated in the figures). The engine unit 7 includes an output shaft (not illustrated in the figures). The output shaft supports the rear wheel 8.

The vehicle body cover 9 covers the vehicle body frame 2. The vehicle body cover 9 includes a front vehicle body cover portion 51, a rear vehicle body cover portion 52 and an under cover portion 53. The front vehicle body cover portion 51 covers the surrounding of the head pipe 21 and the down frame portion 22. The front vehicle body cover portion 51 includes a front face cover portion 54 and a rear face cover portion 55. The front face cover portion 54 covers the front side of the head pipe 21 and the down frame portion 22. The rear face cover portion 55 covers the rear side of the head pipe 21 and the down frame portion 22. The rear face cover portion 55 is positioned forwards of the seat 6. It should be noted that a front fender 56 is disposed over the front wheel 5.

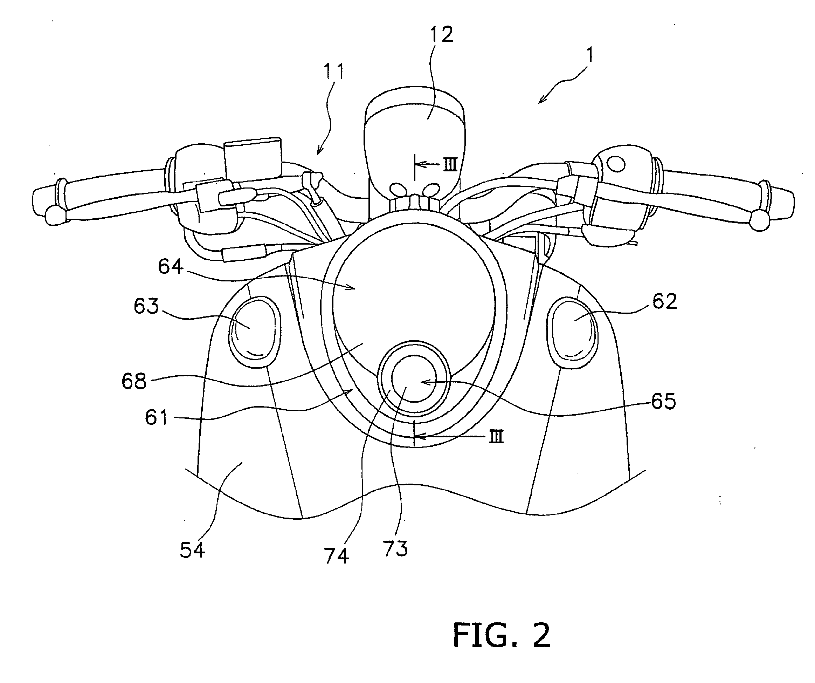

FIG 2 illustrates a partial front view of the motorcycle 1. As illustrated in FIG 2, a head light unit 61 and a pair of a left flasher portion 62 and a right flasher portion 63 on the upper portion of the front face cover portion 54. The head light unit 61 is positioned between the left and right flasher lights 62 and 63. The head light unit 61 includes a first light portion 64 and a second light portion 65. The first light portion 64 and the second light portion 65 are aligned in a vertical (i.e., up-and-down) direction.

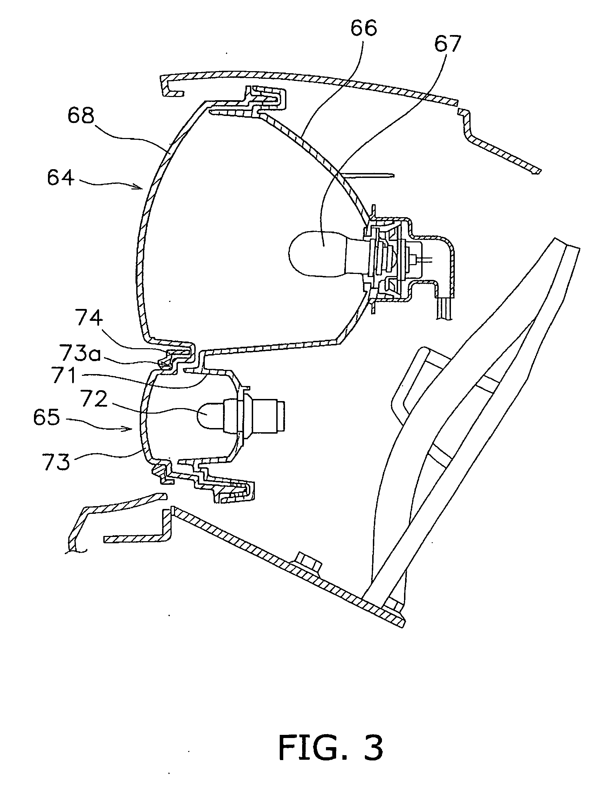

FIG 3 is a cross-sectional view of FIG 2 sectioned along a line III-III. As illustrated in FIG 3, the first light portion 64 includes a first reflective member 66, a first bulb 67 and a first lens portion 68. The first reflective member 66 is recessed rearwards. The first bulb 67 is attached to the first reflective member 66. The first reflective member 66 forwardly reflects light from the first bulb 67. The first lens portion 68 is made of translucent material. The first lens portion 68 covers the front side of the first reflective member 66. On the other hand, the second light portion 65 includes a second reflective member 71, a second bulb 72 and a second lens portion 73. The second reflective member 71 is recessed rearwards. The second bulb 72 is attached to the second reflective member 71. The second reflective member 71 forwardly reflects light from the second bulb 72. The second lens portion 73 is made of translucent material. The second lens portion 73 covers the front side of the second reflective member 71. The second lens portion 73 has an outer diameter less than that of the first lens portion 68. The second lens portion 73 is integrally molded with the first lens portion 68. In other words, the first lens portion 68 and the second lens portion 73 are formed as a single component. A step portion 73a is formed on the surrounding of the second lens portion 73. The step portion 73a has an annular shape in a front view. A ring member 74 is attached onto the step portion 73a. The ring member 74 is a member separately provided from the component forming the first lens portion 68 and the second lens portion 73. The ring member 74 is made of material with a color different from that of the material of the component forming the first les portion 68 and the second lens portion 69. The ring member 74 makes the first and second lens portions 68 and 73 appear to be separate components.

As illustrated in FIG 1, the rear vehicle body cover portion 52 is positioned under the seat 6. The rear vehicle body cover portion 52 covers the front side and the both lateral sides of the rear frame portion 26 disposed under the seat 6.

The under cover portion 53 is positioned between the front vehicle body cover portion 51 and the rear vehicle body cover portion 52. The under cover portion 53 connects the front vehicle body cover portion 51 and the rear vehicle body cover portion 52. The under cover portion 53 includes a footboard 531. The footboard 531 is positioned over the under frame portion 24. The footboard 531 is positioned between the front wheel 5 and the seat 6 in the longitudinal direction. The footboard 531 is positioned lower than the seat 6. Therefore, the vehicle body cover 9 has a contour downwardly recessed between the handle member 11 and the seat 6. The footboard 531 is a surface on which a rider seated on the seat 6 puts his/her feet during travelling. The footboard 531 has an entirely flat shape in the transverse direction.

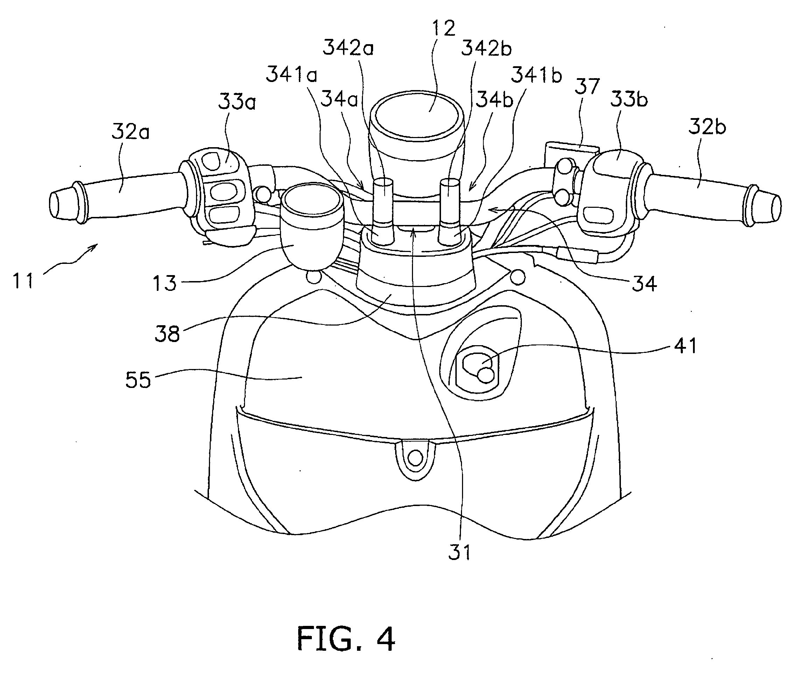

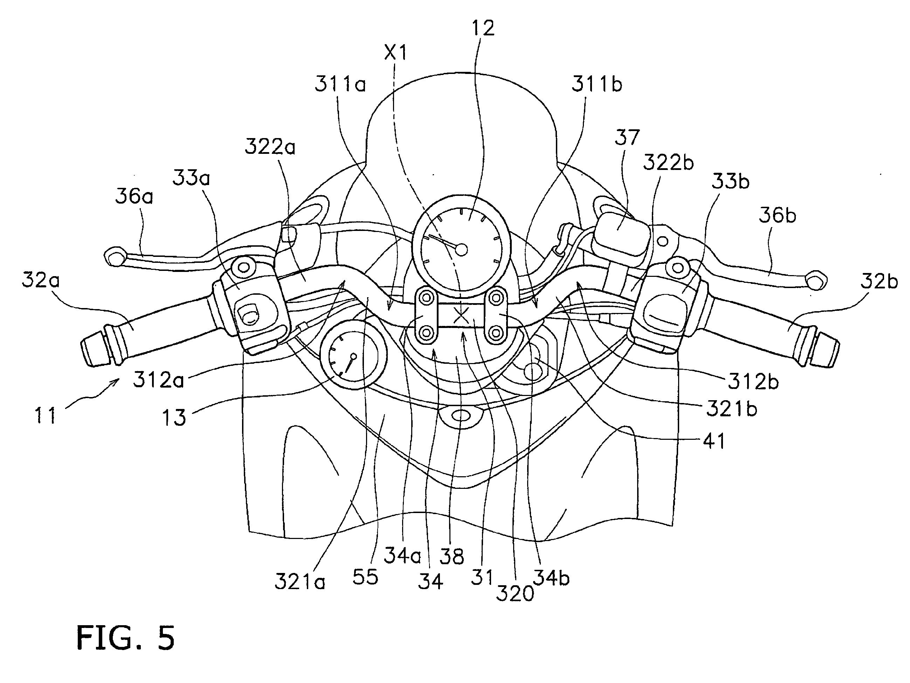

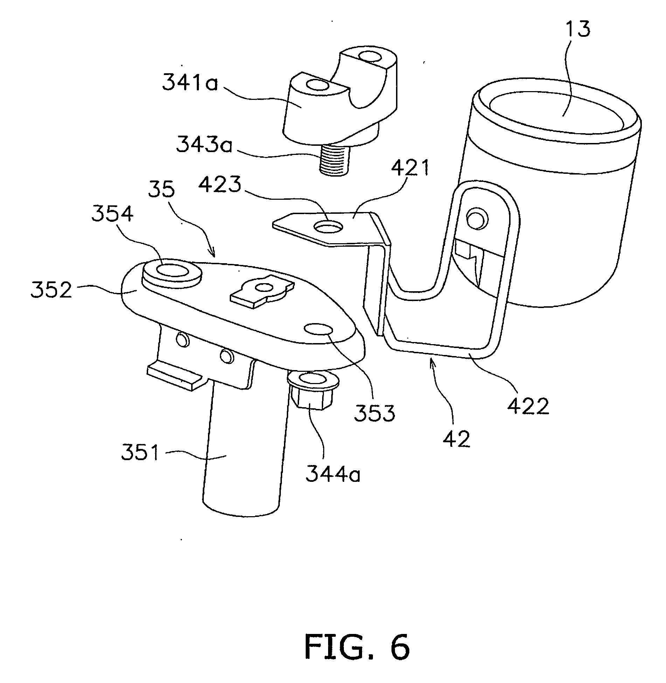

FIG 4 is a rear view of the structure of the handle member 11 and its periphery. FIG 5 is a view of the structure of the handle member 11 and its periphery seen in an axis X1 direction of the head pipe 21 (see FIG 1). The handle member 11 includes a handle bar 31, a pair of a left grip portion 32a and a right grip portion 32b, a pair of a left switch portion 33a and a right switch portion 33b, a handle fixation portion 34 and a handle support portion 35 (see FIG 6). In the following explanation of the handle member 11, the first meter 12 and the second meter 13, "front", "rear", "right", "left" and their related directional terms respectively refer to corresponding directions seen in the axis X1 direction of the head pipe 21 (see FIG 1) where the steering angle of the handle member 11 is zero.

The handle bar 31 is a pipe-shaped member extended in the transverse direction. The handle bar 31 has a bilaterally symmetric shape. As illustrated in FIG 5, the handle bar 31 is bent in a first left bent portion 311 a, a second left bent portion 312a, a first right bent portion 311b and a second right bent portion 312b. The first left bent portion 311 a is positioned leftwards of the center portion of the handle bar 31 in the transverse direction. The second left bent portion 312a is positioned leftwards and forwards of the first left bent portion 311 a. The first right bent portion 311b is positioned rightwards of the center portion of the handle bar 31 in the transverse direction. The second right bent portion 312b is positioned rightwards and forwards of the first right bent portion 311b. The handle bar 31 includes an intermediate portion 320, a first left portion 321a, a second left portion 322a, a first right portion 321b and a second right portion 322b. The intermediate portion 320 is positioned in the center portion of the handle bar 31 in the transverse direction. The intermediate portion 320 is linearly extended in the transverse direction.

The first left portion 321a is positioned leftwards of the intermediate portion 320. The first left portion 321a is obliquely extended leftwards and forwards. The aforementioned first left bent portion 311 a is positioned between the first left portion 321 a and the intermediate portion 3 20. The second left portion 322a is positioned leftwards of the first left portion 321a. The second left portion 322a is obliquely extended leftwards and rearwards. The aforementioned second left bent portion 312a is positioned between the second left portion 322a and the first left portion 321a. The left grip portion 32a and the left switch portion 33a are attached to the second left portion 322a. The left switch portion 33a is positioned inwards of the left grip portion 32a in the transverse direction. The left switch portion 33a includes a switch to be operated by a rider. Further, a left brake lever 36a is disposed forwards of the left switch portion 33a and the left grip portion 32a.

On the other hand, the first right portion 321b is positioned rightwards of the intermediate portion 320. The first right portion 321b is extended obliquely rightwards and forwards. The aforementioned first right bent portion 311b is positioned between the first right portion 321b and the intermediate portion 320. The second right portion 322b is positioned rightwards of the first right portion 321b. The second right portion 322b is extended obliquely rightwards and rearwards. The aforementioned second right bent portion 312b is positioned between the second right portion 322b and the first right portion 321b. The right grip portion 32b and the right switch portion 33b are attached to the second right portion 322b. The right switch portion 33b is positioned inwards of the right grip portion 32b in the transverse direction. The right switch portion 33b includes a switch to be operated by a rider. Further, a right brake lever 36b is disposed forwards of the right switch portion 33b and the right grip portion 32b. Yet further, a brake fluid tank 37 is disposed forwards of the second right portion 322b. The brake fluid tank 37 is disposed inwards of the right grip portion 32b and the right switch portion 33b in the transverse direction.

The handle fixation portion 34 serves to fix the handle bar 31. The handle fixation portion 34 fixes the handle bar 31 onto the handle support portion 35 (see FIG 6). The handle fixation portion 34 includes a left handle fixation member 34a and a right handle fixation member 34b. The left handle fixation member 34a and the right handle fixation member 34b are disposed away from each other in the transverse direction. The left handle fixation member 34a and the right handle fixation member 34b fix the intermediate portion 320 of the handle bar 31 onto the handle support portion 35.

As illustrated in FIG 4, the left handle fixation member 34a includes a first clamp member 341a and a second clamp member 342a. The handle bar 31 is disposed between the first clamp member 341a and the second clamp member 342a. The first clamp member 341a is disposed under the handle bar 31, while the second clamp member 342a is disposed over the handle bar 31. The first clamp member 341a and the second clamp member 342a are fixed by means of fixation members. For example, the fixation members are bolts. On the other hand, the right handle fixation member 34b includes a third clamp member 341b and a fourth clamp member 342b. The handle bar 31 is disposed between the third clamp member 341b and the fourth clamp member 342b. The third clamp member 341b is disposed under the handle bar 31, while the fourth clamp member 342b is disposed over the handle bar 31. The third clamp member 341b and the fourth clamp member 342b are fixed by means of fixation members. For example, the fixation members are bolts.

FIG 6 is an exploded perspective view of a structure for attaching the handle support portion 35 and the second meter 13 to be described. The handle support portion 35 is disposed under the handle fixation portion 34 for supporting the handle fixation portion 34. The handle support portion 35 is disposed under the handle bar 31. The handle support portion 35 includes a first attachment portion 351 and a second attachment portion 352. The first attachment portion 351 has a cylindrical shape. The first attachment portion 351 is attached to the aforementioned steering shaft 3. The second attachment portion 352 is positioned higher than the first attachment portion 351. The second attachment portion 352 is a flat shaped portion protruded from the outer peripheral surface of the first attachment portion 351. The second attachment portion 352 includes a first hole 353 and a second hole 354. A bolt portion 343a, downwardly protruded from the aforementioned first clamp member 341a, is inserted into the first hole 353. The first clamp member 341a is fixed to the second attachment portion 352 by means of the bolt portion 343a and a nut 344a. Similarly, a bolt portion (not illustrated in the figures), downwardly protruded from the third clamp member 341b, is inserted into the second hole 354. The third clamp member 341b is fixed to the second attachment portion 352 by means of the bolt portion and a nut (not illustrated in the figures). It should be noted that the handle support portion 35 is covered with a cover member 38 illustrated in the FIG 4.

As illustrated in FIG 4, a main switch 41 is disposed under the handle member 11. The main switch 41 is a member for starting the vehicle. The main switch 41 includes a switch into which a key (not illustrated in the figures) is inserted. The main switch 41 includes a switch for starting the engine, for instance. The main switch 41 is attached to the aforementioned rear face cover portion 55. The main switch 41 is disposed rightwards of the center portion of the rear face cover portion 55 in the transverse direction. As illustrated in FIG 5, the main switch 41 is also disposed rearwards of the handle bar 31 seen in the axis X1 direction of the head pipe 21. More specifically, the main switch 41 is positioned rearwards of the first right bent portion 311b of the handle bar 31 seen in the axis X1 direction of the head pipe 21. The main switch 41 is disposed rightwards of the axis X1 of the head pipe 21. As illustrated in FIG 1, the main switch 41 is also positioned forwards of the seat 6. Further, the main switch 41 is positioned at the same height as the seat 6. As illustrated in FIG 1, the main switch 41 further includes a key cylinder 43 into which the key is inserted. An axis X2 of the key cylinder 43 is extended obliquely rearwards and upwards from the top face of the key cylinder 43. In a side view, the axis X2 of the key cylinder 43 also passes over the seat 6. In other words, the axis X2 of the key cylinder 43 is not overlapped with the seat 6 in a side view.

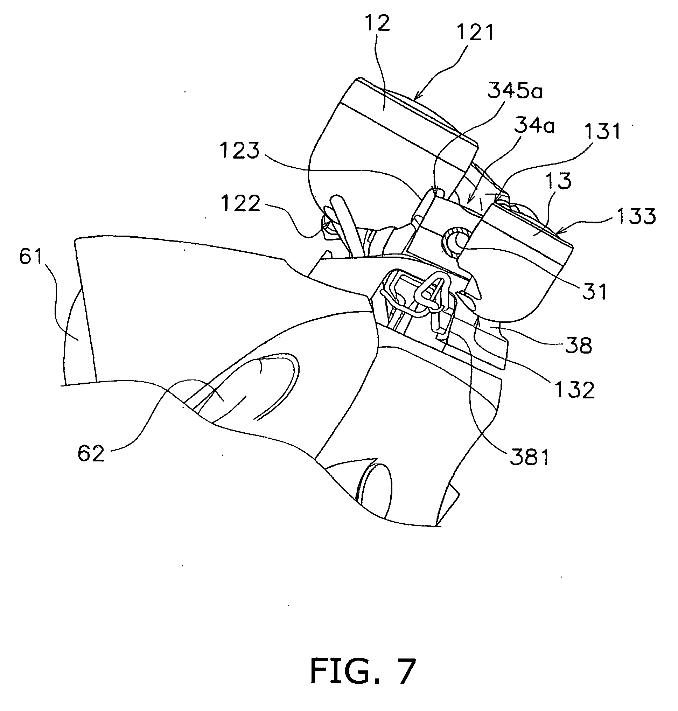

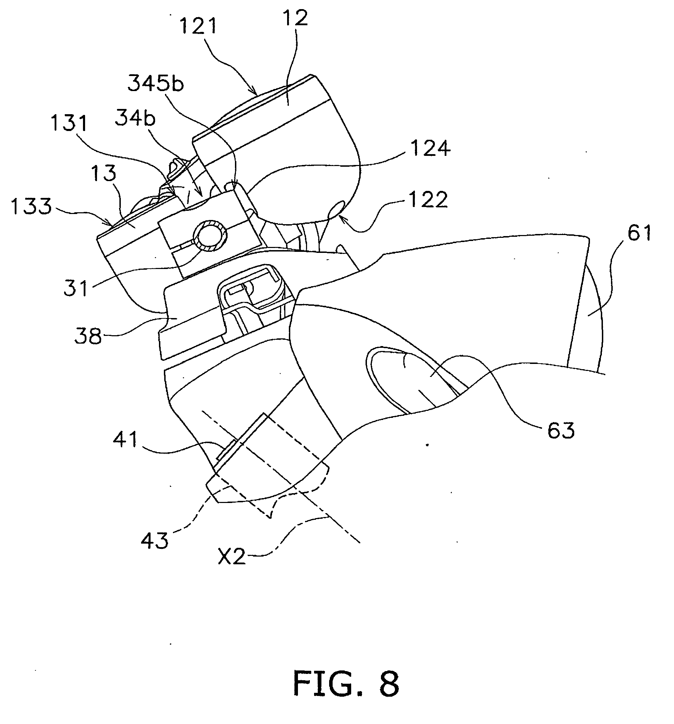

The first meter 12 is configured to display vehicle-related information. Specifically, the first meter 12 is configured to display vehicle-related information detected by a device such as a sensor. For example, the first meter 12 includes a speed meter for displaying the vehicle speed. The first meter 12 has a cylindrical shape. The top face of the first meter 12 has a flat shape. The first meter 12 is disposed forwards of the handle bar 31 seen in the axis X1 direction of the head pipe 21. More specifically, the first meter 12 is disposed forwards of the intermediate portion 320 of the handle bar 31 seen in the axis X1 direction of the head pipe 21. FIG 7 is a left side view of the structure of the first meter 12, the second meter 13 and their peripheries. For easy understanding, FIG 7 omits illustration of some components such as the left grip portion 32a, the left switch portion 33a and a portion of the handle bar 31. FIG 8 is a right side view of the structure of the first meter 12, the second meter 13 and their peripheries. For easy understanding, FIG 8 omits illustration of some components such as the right grip portion 32b, the right switch portion 33b and a portion of the handle bar 31. As illustrated in FIGS. 7 and 8, a top face 121 of the first meter 12 is positioned higher than a peak portion 345a of the left handle fixation member 34a and a peak portion 345b of the right handle fixation member 34b. Further, the top face 121 of the first meter 12 is positioned higher than the handle bar 31. A bottom portion 122 of the first meter 12 is positioned lower than the peak portion 345a of the left handle fixation member 34a and the peak portion 345b of the right handle fixation member 34b. Yet further, the first meter 12 is at least partially overlapped with the left handle fixation member 34a and the right handle fixation member 34b in a side view. The first meter 12 includes a pair of a recess 123 and a recess 124 on the both lateral faces for avoiding interference with the left handle fixation member 34a and the right handle fixation member 34b.

The second meter 13 is configured to display vehicle-related information. Specifically, the second meter 13 is configured to display vehicle-related information detected by a device such as a sensor. For example, the second meter 13 includes a fuel meter for displaying the remaining amount of fuel. The second meter 13 is disposed separately from the first meter 12. The second meter 13 has a cylindrical shape having a diameter less than that of the first meter 12. The top face of the second meter 13 has a flat shape. As illustrated in FIG 5, the second meter 13 is disposed rearwards of the handle bar 31 seen in the axis X1 direction of the head pipe 21. Further, the second meter 13 is disposed leftwards of the axis X1 of the head pipe 21. More specifically, the second meter 13 is disposed rearwards of a portion of the handle bar 31 disposed between the first left bent portion 311a and the second left bent portion 312a. In other words, the second meter 13 is disposed rearwards of the first left portion 321a of the handle bar 31. Further, the second meter 13 is at least partially positioned forwards of the rear end of the handle fixation portion 34 seen in the axis X1 direction of the head pipe 21. Specifically, the front end of the second meter 13 is positioned forwards of the rear end of the handle fixation portion 34 seen in the axis X1 direction of the head pipe 21. Therefore, the second meter 13 is at least partially overlapped with the left handle fixation member 34a and the right handle fixation member 34b, as illustrated in FIGS. 7 and 8. As illustrated in FIG 5, the front end of the second meter 13 is positioned forwards of the rear end of the intermediate portion 320 of the handle bar 31 seen in the axis X1 direction of the head pipe 21. Further, the front end of the second meter 13 is positioned forwards of the rear end of the aforementioned cover member 38 seen in the axis X1 direction of the head pipe 21. Yet further, the front end of the second meter 13 is positioned forwards of the rear end of the aforementioned left switch portion 33a seen in the axis X1 direction of the head pipe 21. As illustrated in FIG. 7, a peak portion 131 of the second meter 13 is positioned higher than the center portion of the handle bar 31 in the transverse direction, i.e., the intermediate portion 320. A bottom portion 132 of the second meter 13 is positioned lower than the center portion of the handle bar 31 in the transverse direction, i.e., the intermediate portion 320.

Atop face 133 of the second meter 13 is slanted at the same angle as the top face 121 of the first meter 12 in a side view. The top face 133 of the second meter 13 is positioned lower than the top face 121 of the first meter 12 in a side view. The peak portion 131 of the second meter 13 is positioned higher than the bottom portion 122 of the first meter 12. As illustrated in FIG 7, the bottom portion 132 of the second meter 13 is positioned lower than the bottom portion 122 of the first meter 12.

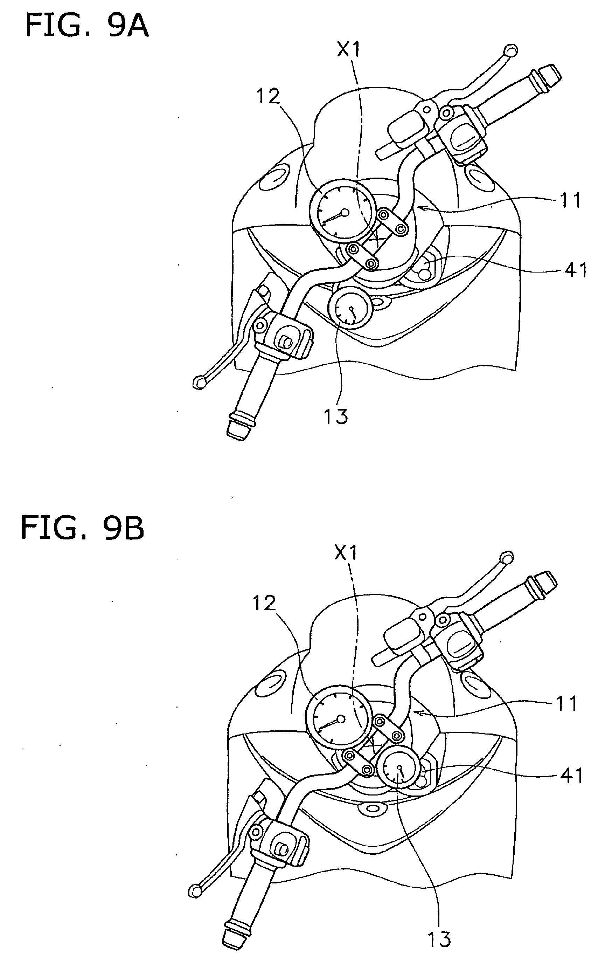

FIG 9 (a) illustrates the handle member 11 and its periphery at the maximum steering angle of the handle member 11 seen in the axis X1 direction of the head pipe 21. As illustrated in FIG 9 (a), the second meter 13 is not overlapped with the main switch 41 at the maximum steering angle of the handle member 11 seen in the axis X1 direction of the head pipe 21.

The second meter 13 is fixed to the handle member 11. As illustrated in FIG 6, the second meter 13 is specifically fixed to the handle support portion 35. An attachment bracket 42 is fixed to the second meter 13. The second meter 13 is fixed to the handle support portion 35 through the attachment bracket 42. The attachment bracket 42 includes an attachment portion 421 and a coupling portion 422. The attachment portion 421 has a plate shape. The attachment portion 421 includes a hole 423. The aforementioned bolt portion 343a of the first clamp member 341a is inserted into the hole 423 of the attachment portion 421. The attachment bracket 42 is thereby fixed to the handle support portion 35. Thus, the handle fixation portion 34 fixes the second meter 13 as well as the handle bar 31 onto the handle support portion 35. The coupling portion 422 is formed by a bent wire rod. The coupling portion 422 couples the second meter 13 and the attachment portion 421. The coupling portion 422 has a shape downwardly extended from the second meter 13 and bent towards the attachment portion 421. As illustrated in FIG 7, the coupling portion 422 is extended towards the handle support portion 35 through a notched portion 381 formed on the lateral face of the aforementioned cover member 38. Therefore, the coupling portion 422 is extended from the lower portion of the second meter 13 towards the cover member 38. Further, the attachment portion 421 is covered with the cover member 38. Therefore, the attachment bracket 42 is disposed in a position less visible from a rider. Thus, the attachment structure of the second meter 13 inhibits deterioration of aesthetic appearance of the motorcycle 1.

The motorcycle 1 according to the present exemplary embodiment has the following features.

As illustrated in FIG 5, the first and second meters 12 and 13 are provided as separate components, and disposed back and forth through the handle bar 31. Thus, the handle bar 31 is visible between the first meter 12 and the second meter 13 seen in the axial direction of the head pipe 21. Therefore, the respective meters can be recognized clearly and distinctly. In other words, visibility of each meter is enhanced. Further, the main switch 41 and the second meter 13 are separately disposed right and left. Therefore, the second meter 13 can be inhibited from blocking a rider's operation of the main switch 41.

FIG 9 (b) illustrates a hypothetical comparative example. In the example, the second meter 13 is disposed immediately behind the center portion of the handle bar 31, and the steering angle of the handle member 11 is set to be identical to that illustrated in FIG 9 (a). In the structure that the second meter 13 is disposed immediately behind the handle bar 31 as illustrated in FIG 9 (b), the second meter 13 is overlapped with the main switch 41 in operating the handle bar 31. Compared to this, the second meter 13 is not overlapped with the main switch 41 even at the maximum steering angle in the motorcycle 1 according to the present exemplary embodiment as illustrated in FIG 9 (a). Therefore, the second meter 13 can be inhibited from blocking a rider's operation of the main switch 41.

As illustrated in FIG 5, the second meter 13 is disposed rearwards of a portion of the handle bar 31 disposed between the first left bent portion 311 a and the second left bent portion 312a. The second meter 13 can be thereby disposed forwards as much as possible. In other words, sufficient distance can be produced between the second meter 13 and the seat 6. This can inhibit a rider from being hit in the knee by the second meter 13.

As illustrated in FIG 5, the second meter 13 is at least partially positioned forwards of the rear end of the handle fixation portion 34 seen in the axis X1 direction of the head pipe 21. The second meter 13 can be thereby disposed forwards as much as possible. In other words, sufficient distance can be produced between the second meter 13 and the seat 6. This can inhibit a rider from being hit in the knee by the second meter 13.

As illustrated in FIG 7, the peak portion 131 of the second meter 13 is positioned higher than the center portion of the handle bar 31 in the transverse direction. Further, the bottom portion 132 of the second meter 13 is positioned lower than the center portion of the handle bar 31 in the transverse direction. Therefore, the second meter 13 can be compactly disposed compared to the structure that the meter unit is disposed over the handle bar 31.

The second meter 13 is fixed to the handle support portion 35 disposed under the handle bar 31. Therefore, the second meter 13 can be inhibited from blocking attachment or detachment of the handle bar 31, compared to the structure that the second meter 13 is fixed to the handle bar 31. Especially, the handle bar 31 can be detached from the handle support portion 35 without detaching the second meter 13 from the handle support portion 35. Therefore, detachment of the handle bar 31 can be easily done.

When the vehicle body cover 9 has a contour downwardly recessed between the handle member 11 and the seat 6 as seen in the motorcycle 1 of the present exemplary embodiment, rider's knees are positioned in the space between the handle member 11 and the seat 6. Therefore, interference between the second meter 13 and rider's knees tends to be problematic depending on the arrangement of the second meter 13. In the motorcycle 1 of the present exemplary embodiment, however, sufficient distance can be produced between the second meter 13 and the seat 6 as described above. Even when rider's knees are disposed in the space between the handle member 11 and the seat 6, it is possible to inhibit a rider from being hit in the knee by the second meter 13.

A rider normally inserts the key into the key cylinder 43 from a position obliquely upwards and rearwards of the main switch 41 when the axis X2 of the key cylinder 43 of the main switch 41 is extended obliquely upwards to the rear from the top face of the key cylinder 43 as seen in the motorcycle 1 according to the present exemplary embodiment. In such a motorcycle, a problematic situation tends to be particularly produced that the second meter 13 blocks a rider's operation of the main switch 41. In the motorcycle 1 according to the present exemplary embodiment, however, the main switch 41 and the second meter 13 are separately disposed right and left as described above. This can inhibit the second meter 13 from blocking a rider's operation of the main switch 41.

When the main switch 41 is disposed on the rear face cover portion 55 as seen in the motorcycle 1 of the present exemplary embodiment, interference between the second meter 13 and the main switch 41 tend to be particularly problematic. In the motorcycle 1 according to the present exemplary embodiment, however, the main switch 41 and the second meter 13 are separately disposed right and left. This can inhibit the second meter 13 from blocking a rider's operation of the main switch 41.

An exemplary embodiment of the present invention has been described above. However, the present invention is not limited to the aforementioned exemplary embodiment, and a variety of changes can be herein made without departing from the scope of the present invention.

The motorcycle 1 according to the aforementioned exemplary embodiment is a scooter-type motorcycle. In the present invention, however, the motorcycle is not limited to the scooter-type motorcycle, and may be any suitable type motorcycle such as an on-road type motorcycle, an off-road type motorcycle or a moped type motorcycle.

The detailed shape of the handle bar 31 is not limited to that of the aforementioned exemplary embodiment. For example, the bent direction and/or the position of the handle bar 31 may be changed.

The surface of the footboard 531 does not necessarily have a completely flat shape and may have a convexo-concave shape. Alternatively, the surface of the footboard 531 may have a curved shape.

The second meter 13 and the main switch 41 may be overlapped at the maximum steering angle of the handle member 11 seen in the axis X1 direction of the head pipe 21. Even in this case, the second meter 13 and the main switch 41 are overlapped in a steering angle range smaller than that in the structure that the second meter 13 is positioned immediately behind the handle bar 31. Therefore, the second meter 13 can be inhibited from blocking a rider's operation of the main switch 41.

The vehicle-related information displayed by the first meter 12 may not be limited to the vehicle speed and may be any other information. Further, the vehicle-related information displayed by the second meter 13 may not be limited to the remaining amount of fuel and may be any other information. For example, the first meter 12 may be configured to display the remaining amount of fuel, while the second meter 13 may be configured to display the vehicle speed.

The specific structure of the handle fixation portion 34 is not limited to that of the aforementioned exemplary embodiment. It is possible to employ a structure different from the structure of the handle fixation portion 34 of the aforementioned exemplary embodiment.

The main switch 41 is not limited to a switch for starting the engine, and may be a switch for activating the electronic system such as the ECU of the vehicle.

In the aforementioned exemplary embodiment, the first meter 12 is disposed forwards away from the front end of the handle bar 31 seen in the axial direction of the head pipe 21, as illustrated in FIG 5. However, the first meter 12 may be partially overlapped with a portion of the handle bar 31. Further, the second meter 13 may be partially overlapped with the handle bar 31 seen in the axial direction of the head pipe 21. In other words, in the present invention, the structure that the first meter is disposed forwards of the handle bar seen in the axial direction of the head pipe means that the center of the first meter in the longitudinal direction is required to be positioned forwards of the axis of the handle bar. Further in the present invention, the structure that the second meter is disposed rearwards of the handle bar seen in the axial direction of the head pipe means that the center of the second meter in the longitudinal direction is required to be positioned rearwards of the axis of the handle bar.

### <Industrial Applicability>

According to the present invention, visibility can be enhanced for each of a plurality of meters mounted on a motorcycle.

### REFERENCE SIGNS LIST

- 2: Vehicle body frame
- 6: Seat
- 9: Vehicle body cover
- 11: Handle member
- 12: First meter
- 13: Second meter
- 21: Head pipe
- 31: Handle bar
- 34: Handle fixed portion
- 35: Handle support portion
- 41: Main switch
- 43: Key cylinder
- 55: Rear face cover portion
- 311 a: First left bent portion
- 312a: Second left bent portion

## Claims

1. A motorcycle, comprising:
a vehicle body fi-ame (2) including a head pipe (21);
a handle member (11) including a handle bar (31), the handle member (11) configured to be rotatable with respect to the head pipe (21);
a main switch (41) configured to start a vehicle;
a first meter (12) configured to display information of the vehicle; and
a second meter (13) configured to display information of the vehicle, the second meter (13) disposed separately from the first meter (12),
wherein the first meter (12) is disposed forwards of the handle bar (31) seen in a direction of an axis (X1) of the head pipe (21),
**characterized in that** the second meter (13) is disposed rearwards of the handle bar (31) seen in the direction of the axis (X1) of the head pipe (21),
the second meter (13) is fixed to the handle member (11),
the second meter (13) is disposed leftwards of the axis (X1) of the head pipe (21),
the main switch (41) is disposed rearwards of the handle bar (31) seen in the direction of the axis (X1) of the head pipe (21), and
the main switch (41) is disposed rightwards of the axis (X1) of the head pipe (21).

2. The motorcycle recited in claim 1,
wherein the handle bar (31) is bent in a first bent portion (311 a) and a second bent portion (312a), the first bent portion (311 a) positioned leftwards of a center portion of the handle bar (31) in a transverse direction of the vehicle, the second bent portion (312a) positioned leftwards and forwards of the first bent portion (311a), and
the second meter (13) is disposed rearwards of a portion of the handle bar (31) positioned between the first bent portion (311a) and the second bent portion (312a).

3. The motorcycle recited in claim 1,
wherein the handle member (11) further includes a handle fixation portion (34) for fixing the handle bar (31), and
the second meter (13) is at least partially positioned forwards of a rear end of the handle fixation portion (34) seen in the direction of the axis (X1) of the head pipe (21).

4. The motorcycle recited in claim 1, wherein the second meter (13) is not overlapped with the main switch (41) at a maximum steering angle of the handle member (11) seen in the direction of the axis (X1) of the head pipe (21).

5. The motorcycle recited in claim 1,
wherein a peak portion (131) of the second meter (13) is positioned higher than a center portion of the handle bar (31) in a transverse direction of the vehicle, and
a bottom portion (132) of the second meter (13) is positioned lower than the center portion of the handle bar (31) in the transverse direction of the vehicle.

6. The motorcycle recited in claim 1,
wherein the handle member (11) further includes a handle fixation portion (34) for fixing the handle bar (31) and a handle support portion (35) for supporting the handle fixation portion (34),
the handle support portion (35) is disposed under the handle bar (31), and
the second meter (13) is fixed to the handle support portion (35).

7. The motorcycle recited in claim 1, further comprising;
a seat (6) disposed rearwards of the handle member (11); and
a vehicle body cover (9) covering the vehicle body frame (2),
wherein the vehicle body cover (9) has a contour recessed downwards between the handle member (11) and the seat (6).

8. The motorcycle recited in claim 1,
wherein the main switch (41) includes a key cylinder (43) allowing a key to be inserted therein,
and
an axis (X2) of the key cylinder (43) is obliquely extended rearwards and upwards from a top face of the key cylinder (43).

9. The motorcycle recited in claim 1, further comprising:
a vehicle body cover covering (9) the vehicle body frame (2),
wherein the vehicle body cover (9) includes a rear face cover portion covering a back side of the head pipe (21), and
the main switch (41) is disposed in the rear face cover portion.

10. The motorcycle recited in claim 1, wherein the handle bar (31) is visible between the first meter (12) and the second meter (13) seen in the direction of the axis (X1) of the head pipe (21).

11. The motorcycle recited in claim 1, wherein a front end of a top face of the second meter (13) is positioned forwards of a rear end of a center portion of the handle bar (31) in a transverse direction of the vehicle seen in the direction of the axis (X1) of the head pipe (21).

## Patentansprüche

1. Ein Motorrad, das folgende Merkmale aufweist:
einen Fahrzeugkörperrahmen (2), der ein Kopfrohr (21) umfasst;
ein Griffbauglied (11), das eine Lenkstange (31) umfasst, wobei das Griffbauglied (11) konfiguriert ist, um bezüglich des Kopfrohrs (21) drehbar zu sein;
einen Hauptschalter (41), der konfiguriert ist, um ein Fahrzeug zu starten;
ein erstes Messinstrument (12), das konfiguriert ist, um Informationen des Fahrzeugs anzuzeigen; und
ein zweites Messinstrument (13), das konfiguriert ist, um Informationen des Fahrzeugs anzuzeigen, wobei das zweite Messinstrument (13) getrennt von dem ersten Messinstrument (12) angeordnet ist,
wobei das erste Messinstrument (12) in einer Richtung einer Achse (X1) des Kopfrohrs (21) gesehen vor der Lenkstange (31) angeordnet ist,
**dadurch gekennzeichnet, dass** das zweite Messinstrument (13) in der Richtung der Achse (X1) des Kopfrohrs (21) gesehen hinter der Lenkstange (31) angeordnet ist,
das zweite Messinstrument (13) an dem Griffbauglied (11) fixiert ist,
das zweite Messinstrument (13) links von der Achse (X1) des Kopfrohrs (21) angeordnet ist,
der Hauptschalter (41) in der Richtung der Achse (X1) des Kopfrohrs (21) gesehen hinter der Lenkstange (31) angeordnet ist, und
der Hauptschalter (41) rechts von der Achse (X1) des Kopfrohrs (21) angeordnet ist.

2. Das Motorrad gemäß Anspruch 1,
bei dem die Lenkstange (31) in einen ersten gebogenen Abschnitt (311a) und einen zweiten gebogenen Abschnitt (312a) gebogen ist, wobei der erste gebogene Abschnitt (311 a) in einer Querrichtung des Fahrzeugs links von einem Mittelabschnitt der Lenkstange (31) positioniert ist, wobei der zweite gebogene Abschnitt (312a) links von und vor dem ersten gebogenen Abschnitt (311a) positioniert ist, und
das zweite Messinstrument (13) hinter einem Abschnitt der Lenkstange (31) angeordnet ist, der zwischen dem ersten gebogenen Abschnitt (311 a) und dem zweiten gebogenen Abschnitt (312a) angeordnet ist.

3. Das Motorrad gemäß Anspruch 1,
bei dem das Griffbauglied (11) ferner einen Grifffixierungsabschnitt (34) zum Fixieren der Lenkstange (31) umfasst, und
das zweite Messinstrument (13) in der Richtung der Achse (X1) des Kopfrohrs (21) gesehen zumindest teilweise vor einem hinteren Ende des Grifffixierabschnitts (34) angeordnet ist.

4. Das Motorrad gemäß Anspruch 1, bei dem das zweite Messinstrument (13), in der Richtung der Achse (X1) des Kopfrohrs (21) gesehen, in einem maximalen Lenkwinkel des Griffbauglieds (11) nicht mit dem Hauptschalter (41) überlappt.

5. Das Motorrad gemäß Anspruch 1,
bei dem ein Spitzenabschnitt (131) des zweiten Messinstruments (13) in einer Querrichtung des Fahrzeugs höher positioniert ist als ein Mittelabschnitt der Lenkstange (31), und
ein Unterabschnitt (132) des zweiten Messinstruments (13) in der Querrichtung des Fahrzeugs niedriger angeordnet ist als der Mittelabschnitt der Lenkstange (31).

6. Das Motorrad gemäß Anspruch 1,
bei dem das Griffbauglied (11) ferner einen Grifffixierabschnitt (34) zum Fixieren der Lenkstange (31) und einen Grifftrageabschnitt (35) zum Tragen des Grifffixierabschnitts (34) umfasst,
wobei der Grifftrageabschnitt (35) unter der Lenkstange (31) angeordnet ist, und das zweite Messinstrument (13) an dem Grifftrageabschnitt (35) fixiert ist.

7. Das Motorrad gemäß Anspruch 1, das ferner folgende Merkmale aufweist:
einen Sitz (6), der hinter dem Griffbauglied (11) angeordnet ist; und
eine Fahrzeugkörperabdeckung (9), die den Fahrzeugkörperrahmen (2) abdeckt,
wobei die Fahrzeugkörperabdeckung (9) einen Umriss aufweist, der zwischen dem Griffbauglied (11) und dem Sitz (6) nach unten mit einer Aussparung versehen ist.

8. Das Motorrad gemäß Anspruch 1,
bei dem der Hauptschalter (41) einen Schlüsselzylinder (43) umfasst, in den ein Schlüssel eingefügt werden kann, und
eine Achse (X2) des Schlüsselzylinders (43) sich von einer Oberfläche des Schlüsselzylinders (43) aus schräg nach hinten und oben erstreckt.

9. Das Motorrad gemäß Anspruch 1, das ferner folgende Merkmale aufweist:
eine Fahrzeugkörperabdeckung (9), die den Fahrzeugkörperrahmen (2) abdeckt,
wobei die Fahrzeugkörperabdeckung (9) einen Rückflächenabdeckungsabschnitt umfasst, der eine Rückseite des Kopfrohrs (21) abdeckt, und
der Hauptschalter (41) in dem Rückflächenabdeckungsabschnitt angeordnet ist.

10. Das Motorrad gemäß Anspruch 1, bei dem die Lenkstange (31) in der Richtung der Achse (X1) des Kopfrohrs (21) gesehen zwischen dem ersten Messinstrument (12) und dem zweiten Messinstrument (13) sichtbar ist.

11. Das Motorrad gemäß Anspruch 1, bei dem ein vorderes Ende einer oberen Fläche des zweiten Messinstruments (13), in der Richtung der Achse (X1) des Kopfrohrs (21) gesehen, in einer Querrichtung des Fahrzeugs vor einem hinteren Ende eines Mittelabschnitts der Lenkstange (31) positioniert ist.

## Revendications

1. Motocyclette, comprenant:
un châssis de carrosserie de véhicule (2) comprenant un tube de tête (21);
un élément de poignée (11) comportant une guidon (31), l'élément de poignée (11) étant configuré pour pouvoir tourner par rapport au tube de tête (21);
un interrupteur principal (41) configuré pour mettre en marche un véhicule;
un premier compteur (12) configuré pour afficher des informations du véhicule;
un deuxième compteur (13) configuré pour afficher des informations du véhicule, le deuxième compteur (13) étant disposé séparément du premier compteur (12),
dans laquelle le premier compteur (12) est disposé en avant du guidon (31), vu dans une direction d'un axe (X1) du tube de tête (21),
**caractérisé par le fait que** le deuxième compteur (13) est disposé en arrière du guidon (31), vu dans la direction de l'axe (X1) du tube de tête (21),
le deuxième compteur (13) est fixé à l'élément de poignée (11),
le deuxième compteur (13) est disposé à gauche de l'axe (X1) du tube de tête (21),
l'interrupteur principal (41) est disposé en arrière du guidon (31), vu dans la direction de l'axe (X1) du tube de tête (21), et
l'interrupteur principal (41) est disposé à droite de l'axe (X1) du tube de tête (21).

2. Motocyclette selon la revendication 1,
dans laquelle la guidon (31) est recourbé en une première partie courbée (311a) et une deuxième partie courbée (312a), la première partie courbée (311a) étant positionnée à gauche d'une partie centrale du guidon (31) dans une direction transversale du véhicule, la deuxième partie courbée (312a) étant positionnée à gauche et en avant de la première partie courbée (311a), et
le deuxième compteur (13) est disposé en arrière d'une partie du guidon (31) positionnée entre la première partie courbée (311a) et la deuxième partie courbée (312a).

3. Motocyclette selon la revendication 1,
dans laquelle l'élément de poignée (11) comporte par ailleurs une partie de fixation de poignée (34) pour la fixation du guidon (31), et
le deuxième compteur (13) est positionné au moins partiellement en avant d'une extrémité arrière de la partie de fixation de poignée (34), vu dans la direction de l'axe (X1) du tube de tête (21).

4. Motocyclette selon la revendication 1, dans laquelle le deuxième compteur (13) ne vient pas en recouvrement avec l'interrupteur principal (41) à un angle de guidage maximum de l'élément de poignée (11), vu dans la direction de l'axe (X1) du tube de tête (21).

5. Motocyclette selon la revendication 1,
dans laquelle une partie de pointe (131) du deuxième compteur (13) est positionnée plus haute qu'une partie centrale du guidon (31) dans une direction transversale du véhicule, et
une partie inférieure (132) du deuxième compteur (13) est positionnée plus basse que la partie centrale du guidon (31) dans la direction transversale du véhicule.

6. Motocyclette selon la revendication 1,
dans laquelle l'élément de poignée (11) comporte par ailleurs une partie de fixation de poignée (34) pour la fixation du guidon (31) et une partie de support de poignée (35) pour supporter la partie de fixation de poignée (34),
la partie de support de poignée (35) est disposée au-dessous du guidon (31), et
le deuxième compteur (13) est fixé à la partie de support de poignée (35).

7. Motocyclette selon la revendication 1, comprenant par ailleurs:
un siège (6) disposé en arrière de l'élément de poignée (11), et
un couvercle de carrosserie de véhicule (9) recouvrant le châssis de carrosserie de véhicule (2),
dans laquelle le couvercle de carrosserie de véhicule (9) présente un contour en retrait vers le bas entre l'élément de poignée (11) et le siège (6).

8. Motocyclette selon la revendication 1,
dans laquelle l'interrupteur principal (41) comporte un cylindre à clé (43) permettant d'y introduire une clé, et
un axe (X2) du cylindre à clé (43) est prolongé obliquement vers l'arrière et vers le haut depuis une face supérieure du cylindre à clé (43).

9. Motocyclette selon la revendication 1, comprenant par ailleurs:
un couvercle de carrosserie de véhicule (9) recouvrant le châssis de carrosserie de véhicule (2),
dans laquelle le couvercle de carrosserie de véhicule (9) comporte une partie de couvercle de face arrière recouvrant un côté arrière du tube de tête (21), et
l'interrupteur principal (41) est disposé dans la partie de couvercle de face arrière.

10. Motocyclette selon la revendication 1, dans laquelle le guidon (31) est visible entre le premier compteur (12) et le deuxième compteur (13), vu dans la direction de l'axe (X1) du tube de tête (21).

11. Motocyclette selon la revendication 1, dans laquelle une extrémité avant d'une face supérieure du deuxième compteur (13) est positionnée en avant d'une extrémité arrière d'une partie centrale du guidon (31) dans une direction transversale du véhicule, vu dans la direction de l'axe (X1) du tube de tête (21).
